# FASCICULE DE BREVET EUROPEEN

(11) **EP 0 950 909 B1**
(45) Date de publication et mention de la délivrance du brevet: **10.08.2005**
(21) Numéro de dépôt: 98106764.8
(22) Date de dépôt: 14.04.1998
(51) Int. Cl.: G02B 15/04, G02B 3/10

(54) **Dispositif optique de collection de la lumière formant un objectif à focales multiples**
Lichtsammelndes optisches System, das ein Objektiv mit mehreren Brennweiten bildet
Light collecting optical system forming a multiple focus lens

(43) Date de publication de la demande: 20.10.1999
(73) Titulaire: Asulab S.A., 2074 Marin (CH)
(72) Inventeur: Grupp, Joachim, 2003 Neuchâtel (CH)
(74) Mandataire: Balsters, Robert

(56) Documents cités:
- EP-A- 0 566 073
- US-A- 5 027 144
- US-A- 5 499 072
- US-A- 5 515 206
- US-A- 5 784 209

## Description

La présente invention concerne un dispositif optique de collection de la lumière formant objectif de petite dimension afin de pouvoir être intégré, par exemple dans un appareil photographique dit compact, et permettant au choix d'effectuer des prises de vues standards ou des prises de vues au téléobjectif.

Les éléments essentiels d'un appareil photographique sont la chambre noire, l'objectif, l'obturateur qui permet l'admission de la lumière pendant un temps suffisamment court, et une pellicule photosensible pour l'enregistrement de l'image. Pour produire des expositions très courtes, on doit utiliser un objectif de grande ouverture. Ceci implique, pour un appareil de grande qualité, un objectif complexe où les aberrations des éléments tendent à se compenser mutuellement.

Les objectifs d'appareil photographique sont caractérisés par deux paramètres. L'un deux est sa distance focale f qui dépend d'une part des indices de réfraction du milieu extérieur et des lentilles qui le constituent, et d'autre part des rayons de courbure de ces lentilles. Le second paramètre qui caractérise un objectif photographique est son ouverture, habituellement exprimée par rapport à la distance focale. Un objectif f/8, par exemple, a une ouverture égale à un huitième de la distance focale. L'intensité de l'image formée sur la pellicule est fonction de l'ouverture de l'objectif. Pratiquement tous les appareils photographiques ont un objectif muni d'un diaphragme pour pouvoir modifier l'ouverture de celui-ci.

Il existe actuellement sur le marché deux grandes familles d'appareils photographiques. L'une de ces familles est constituée par les boîtiers photographiques à objectif interchangeable sur lesquels on peut, selon les besoins, adapter des objectifs de distances focales différentes. L'autre famille concerne les appareils photographiques dits compacts apparus sur le marché il y a une quinzaine d'années environ. Ces appareils se caractérisent généralement par un faible encombrement et une grande simplicité d'utilisation. Ils comportent un objectif inamovible dont la distance focale peut être fixe ou variable.

En pratique, lorsque l'objectif est à distance focale fixe, les lentilles qui le composent sont agencées dans le volume intérieur du boîtier compact. Ce mode de construction permet de garantir l'étanchéité de l'appareil photographique. Par contre, l'utilisateur ne dispose que d'un seul agrandissement défini par la géométrie optique de l'objectif. Les objectifs à distance focale variable, encore appelés zoom, offrent à l'utilisateur une plage continue d'agrandissement, mais font saillie de la face avant du boîtier photographique, ce qui nuit à l'étanchéité de l'appareil.

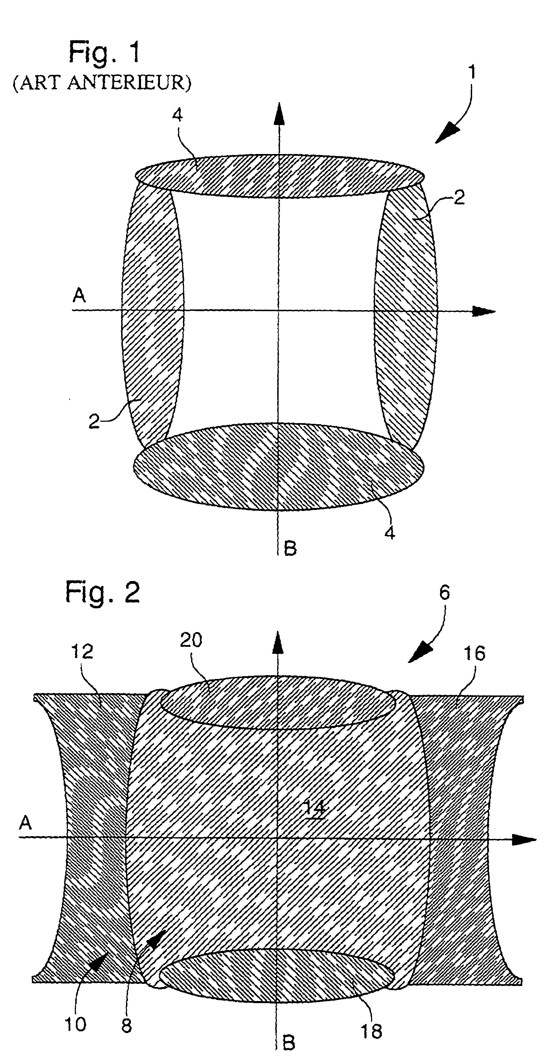

Pour remédier à ce problème, il a été proposé d'intégrer dans le boîtier des appareils compacts un dispositif optique formant objectif à focale multiple dont une forme d'exécution connue est représentée sur la figure 1 annexée à la présente demande. Un tel dispositif, désigné dans son ensemble par la référence numérique générale 1, comprend classiquement deux paires de lentilles parallèles et opposées deux à deux telles que, respectivement, 2 et 4. Les indices de réfraction et les rayons de courbure des faces de ces lentilles 2, 4 sont ajustés de façon à obtenir les distances focales souhaitées, représentées par les directions A et B sur la figure 1. En pratique, l'une de ces distances focales qui peut être, par exemple, de 38 ou 50 mm, doit permettre d'effectuer des prises de vues standards, tandis que l'autre distance focale procure un agrandissement de type téléobjectif. Les distances focales A, B définies par les deux paires de lentilles 2, 4 étant perpendiculaires entre elles, il suffit de faire pivoter le dispositif optique 1 d'un quart de tour pour passer d'une prise de vue en mode standard à une prise de vue en mode téléobjectif.

Le dispositif 1 ci-dessus présente un double intérêt. Il peut d'une part être facilement intégré dans le volume intérieur d'un boîtier d'appareil photographique compact, ce qui permet d'éviter les problèmes d'étanchéité susmentionnés. Il offre d'autre part à l'utilisateur la possibilité de choisir entre deux agrandissements différents.

Le dispositif optique 1 présente cependant aussi certains inconvénients. Une lentille seule ne produisant pas une image de bonne qualité, les lentilles 2, 4 sont préférentiellement agencées par paires afin de compenser les aberrations chromatiques. Or, pendant sa traversée du dispositif 1, la lumière est réfractée à chaque interface lentille/air, de sorte qu'il est difficile de produire une image convenablement focalisée. Les lentilles 2, 4 doivent par ailleurs être taillées et assemblées avec une grande précision, ce qui augmente sensiblement le prix de revient de telles structures.

Des objectifs à focales multiples sont divulgués dans US 5,499,072 et US 5,784,209.

La présente invention a pour but de remédier aux problèmes et inconvénients ci-dessus en proposant un dispositif optique formant objectif de petite dimension afin de pouvoir être notamment intégré dans le boîtier d'un appareil photographique compact.

A cet effet, la présente invention concerne un dispositif optique de collection de la lumière tel que défini dans la revendication 1.

Grâce à ces caractéristiques, la présente invention procure un dispositif optique peu coûteux et peu encombrant, de sorte qu'il peut être facilement intégré par exemple dans le boîtier d'un appareil photographique compact. Par ailleurs, la structure monolithique du dispositif selon l'invention permet d'éviter les phénomènes de réflexion de la lumière aux interfaces lentille/air, de sorte qu'il est possible d'obtenir une image de bonne qualité.

D'autres caractéristiques et avantages de la présente invention apparaîtront plus clairement à la lecture de la description détaillée qui suit d'un exemple de réalisation du dispositif optique selon l'invention, cet exemple étant donné à titre purement illustratif et non limitatif, en liaison avec les dessins annexés dans lesquels :
- la figure 1, déjà citée, est une vue schématique d'une forme d'exécution d'un dispositif optique à focale multiple selon l'art antérieur;
- la figure 2 est une vue schématique du dispositif optique à focale multiple selon l'invention;
- la figure 3 représente une forme particulière d'exécution du dispositif selon l'invention, et
- la figure 4 représente la focalisation des rayons lumineux issus d'un objet dans le plan image du dispositif optique de la figure 3.

Un exemple préféré d'application du dispositif optique selon l'invention se rapporte aux appareils photographiques compacts. Grâce à la présente invention, il est possible d'offrir à l'utilisateur la possibilité de choisir entre plusieurs agrandissements, tout en garantissant l'étanchéité de l'appareil photographique. Il va néanmoins de soi que le présent dispositif pourra être appliqué à tout autre système optique tel que, par exemple, un système à faisceau laser, dans lequel il est nécessaire de focaliser la lumière à deux distances différentes.

Comme il ressort de la figure 2, le dispositif optique selon l'invention, désigné dans son ensemble par la référence numérique 6, se présente sous la forme d'une pièce monobloc dont la forme générale extérieure s'inscrit sensiblement dans un parallélépipède. Conformément à l'invention, le dispositif 6 est formé d'une première et d'une seconde matières transparentes, respectivement 8 et 10, conformées selon deux triplets de lentilles accolées 12, 14 et 16 d'une part, et 18, 14 et 20 d'autre part pour focaliser les rayons lumineux de manière à créer une image. Les indices de réfraction et les rayons de courbure des faces des lentilles 12 à 20 sont déterminés de façon à obtenir les distances focales A et B souhaitées. En pratique, la distance focale A, déterminée par le triplet de lentilles 12, 14, 16, peut être de 50 mm par exemple, pour permettre d'effectuer des prises de vues standards, tandis que la distance focale B, déterminée par le triplet de lentilles 18, 14, 20, peut être adaptée de manière à procurer un agrandissement de type téléobjectif. Les lentilles 12 à 20 sont agencées de sorte que les distances focales A et B soient perpendiculaires aux faces latérales du dispositif optique 6 et forment entre elles un angle droit. Il suffit alors de faire pivoter le dispositif optique 6 selon l'invention d'un quart de tour pour passer du mode de prise de vue standard au mode de prise de vue téléobjectif.

Il va de soi que le nombre de matières sélectionnées pour fabriquer le dispositif optique 6 peut être supérieur à deux. Ces matières peuvent être au choix du verre, un matériau plastique ou toute autre matière adaptée. Il faudra simplement veiller à ce que la température de fusion de la première matière utilisée pour réaliser le coeur du dispositif 6 soit supérieure à celle de la seconde matière moulée autour de la première. De même, on peut envisager un dispositif optique présentant, par exemple, trois distances focales différentes, espacées de 45° les unes des autres. On peut également envisager d'utiliser la distance focale perpendiculaire aux faces inférieure et supérieure du dispositif optique 6.

Selon un avantage important de l'invention, les lentilles 12, 14 et 16 sont intimement liées les unes aux autres. La lumière n'est ainsi réfléchie qu'au moment où elle pénètre et où elle émerge du dispositif optique 6, de sorte qu'il est plus facile de produire une image de bonne qualité. Ce phénomène de réflexion peut encore être atténué en revêtant les faces extérieures du dispositif optique 6 d'une couche d'un matériau antireflet. Il faut en effet comprendre qu'à chaque interface lentille/air, environ 4% de la lumière incidente est réfléchie. Ainsi, dans le cas du dispositif 1 de l'art antérieur représenté sur la figure 1, la lumière subit quatre réflexions successives pendant sa traversée dudit dispositif 1, ce qui représente une atténuation de l'ordre de 15% de la lumière transmise. De plus, la lumière réfléchie aux interfaces lentille/air contribue à la formation d'images dites fantômes qui altèrent notablement la qualité de l'image résultante. Seule l'utilisation de couches antireflet de grande qualité et donc coûteuses permet de remédier à ce problème. Au contraire, dans le cadre de la présente invention, l'utilisation d'un revêtement antireflet de qualité courante s'avère suffisante.

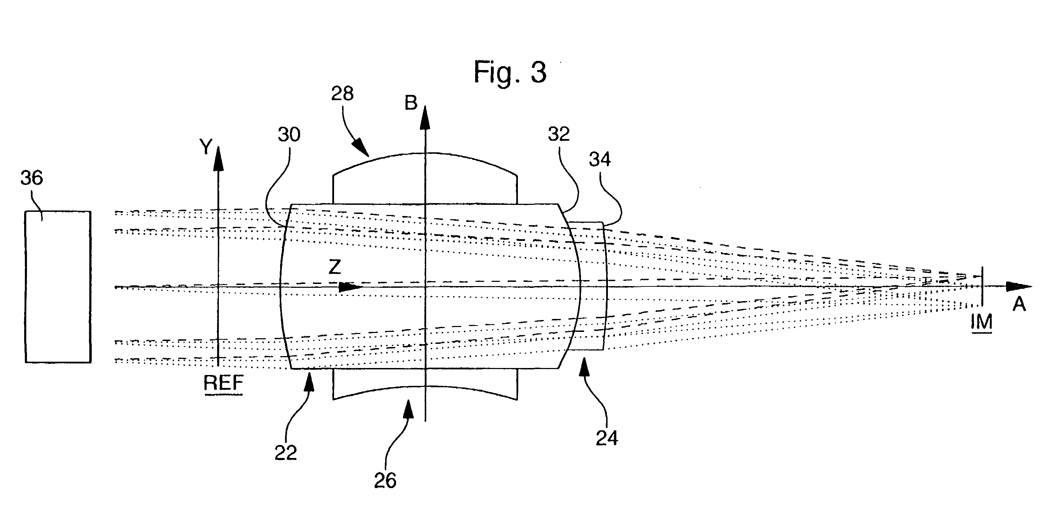

On représente sur la figure 3 une forme particulière d'exécution du dispositif optique 6 selon l'invention dans laquelle la distance focale A est déterminée par un doublet de lentilles accolées 22 et 24, et la distance focale B est déterminée par un triplet de lentilles accolées 26, 22 et 28. A titre d'exemple, la lentille 22 est réalisée en poly-4-méthyl-pentane d'indice de réfraction n₁ = 1,47, et la lentille 24 est réalisée en polystyrène d'indice de réfraction n₂ = 1,59. Toujours à titre d'exemple, la courbure de la face d'entrée 30 de la lentille 22, exprimée comme l'inverse du rayon de courbure, est égale à 0,068 mm⁻¹, et la courbure de la face de sortie 32 de la lentille 22 est égale à 0,14 mm⁻¹. Enfin, la courbure de la face de sortie 34 de la lentille 24 est égale à 0,043 mm⁻¹. On a également représenté sur la figure 3 un repère orthogonal (Y, Z) disposé dans le plan de la figure et dont l'axe Z est dirigé selon la distance focale A. Ce repère (Y, Z) définit un plan de référence REF à partir duquel sont calculés les trajets des rayons lumineux issus d'un objet 36 situé à une distance de l'ordre de 200 mm du dispositif optique 6 et focalisés dans un plan image IM. Les distances suivantes sont exprimées le long de l'axe Z : le plan de référence REF est situé à 3 mm de la face d'entrée 30 de la lentille 22 ; l'épaisseur de la lentille 22 est de 14,7 mm ; l'épaisseur de la lentille 24 est de 1,3 mm et le plan image IM est disposé à 18 mm de la face de sortie 34 de la lentille 24.

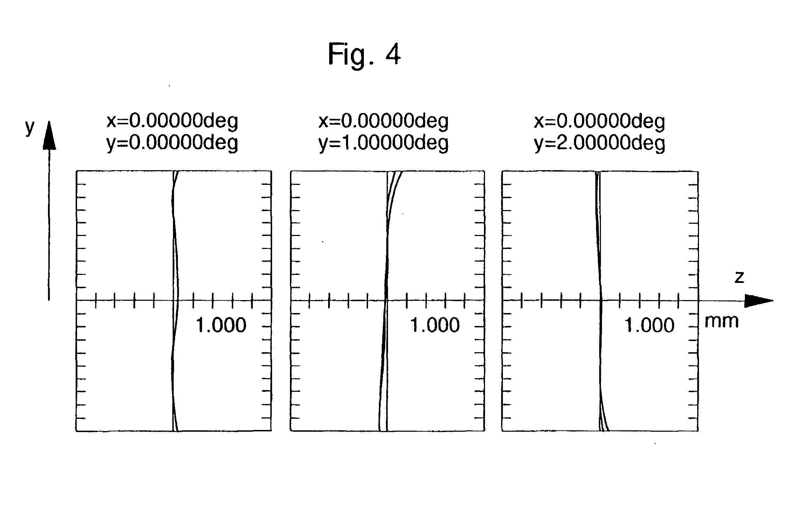

On donne à la figure 4 les fluctuations au voisinage du plan image IM du point focal correspondant à des rayons lumineux issus des points de l'objet 36 dont les coordonnées sont respectivement (Y = 0° ; Z = 0°), (Y = 1° ; Z = 0°) et (Y = -2° ; Z = 0°). Comme on peut le constater, la focalisation des rayons lumineux dans le plan image IM est excellente. Ces calculs ont été réalisés pour tout le spectre visible avec une longueur d'onde de 656 nm comme référence.

Il va de soi que diverses modifications et variantes simples entrent dans le cadre de la présente invention. On remarquera en particulier que les distances focales peuvent être formées chacune d'un nombre quelconque de lentilles supérieur ou égal à deux, les aberrations chromatiques de ces lentilles se compensant d'autant mieux que leur nombre est plus élevé.

## Revendications

1. Dispositif optique de collection de la lumière à focales multiples formant un objectif pour un appareil photographique consistant en une structure monobloc telle que la lumière n'est réfractée à une interface entre l'air et le dispositif optique (6) qu'au moment où elle pénètre et où elle émerge dudit dispositif optique (6), ce dispositif optique (6) étant tel que la structure monobloc, formée d'un corps central (14), présente au moins deux axes optiques (A, B) formant entre eux un angle non nul, une image pouvant être formée selon chaque axe optique respectivement, au moins deux lentilles (12, 16) étant accollées de part et d'autre du corps central (14) selon l'axe optique (A) et au moins deux lentilles (18, 20) étant accollées de part et d'autre du corps central (14) selon l'axe optique (B), le corps central (14) et les lentilles (12, 16; 18, 20) étant formés d'au moins une première et une seconde matière transparentes différentes (8, 10), les indices de réfraction et les rayons de courbure des faces des lentilles étant déterminés pour que la structure monobloc présente, selon les deux axes optique (A, B), deux distances focales de valeurs différentes et pour que la focalisation des rayons lumineux dans la plan image soit excellente pour tout le spectre visible.

2. Dispositif optique selon la revendication 1, **caractérisé en ce que** chaque distance focale est déterminée par un triplet de trois lentilles accolées (12, 14, 16, 18, 20), de sorte que les aberrations chromatiques de ces lentilles (12, 14, 16, 18, 20) tendent à se compenser mutuellement de manière efficace.

3. Dispositif optique selon l'une quelconque des revendications 1 ou 2, **caractérisé en ce que** les axes optiques (A, B) sont perpendiculaires entre eux.

4. Dispositif optique selon l'une quelconque des revendications 1 ou 2, **caractérisé en ce qu'**il présente trois axes optiques distincts, espacés de 45° les uns des autres.

5. Dispositif optique selon l'une quelconque des revendications 1 à 4, **caractérisé en ce que** le bloc optique à une forme sensiblement parallélépipédique et **en ce qu'**il présente un axe optique perpendiculaire à ses faces inférieure et supérieure.

6. Dispositif optique selon l'une quelconque des revendications 1 à 5, **caractérisé en ce que** la matière (6, 8) sélectionnée pour fabriquer ledit dispositif optique (6) peut être au choix du verre ou un matériau plastique.

7. Dispositif optique selon l'une quelconque des revendications 1 à 6, **caractérisé en ce que** les faces extérieures dudit dispositif optique (6) sont revêtues d'une couche d'un matériau antireflet.

8. Dispositif optique selon l'une quelconque des revendications 1 à 7, **caractérisé en ce que** la température de fusion de la première matière utilisée pour réaliser le coeur dudit dispositif optique (6) est supérieure à celle de la seconde matière moulée autour de la première.

9. Dispositif optique selon l'une quelconque des revendications 1 à 8, **caractérisé en ce que** les matières sélectionnées pour fabriquer ledit dispositif optique (6) ont des indices de réfraction égaux à 1,47 et 1,59 respectivement.

10. Dispositif optique selon l'une quelconque des revendications 6 à 9, **caractérisé en ce que** les matières sélectionnées pour fabriquer ledit dispositif optique (6) sont du poly-4-méthyl-pentane et du polystyrène.

## Patentansprüche

1. Optische Lichtsammelvorrichtung mit mehreren Brennpunkten, die ein Objektiv für einen Photoapparat bildet und aus einer Monoblockstruktur besteht, derart, dass das Licht an einer Grenzfläche zwischen der Luft und der optischen Vorrichtung (6) nur zu dem Zeitpunkt gebrochen wird, zu dem es eintritt und zu dem es aus der optischen Vorrichtung (6) austritt, wobei diese optische Vorrichtung (6) so beschaffen ist, dass die Monoblockstruktur, die aus einem Mittelkörper (14) gebildet ist, wenigstens zwei optische Achsen (A, B) aufweist, die untereinander einen von null verschiedenen Winkel bilden, wobei längs jeder optischen Achse jeweils ein Bild erzeugt werden kann, wobei wenigstens zwei Linsen (12, 16) beiderseits des Mittelkörpers (14) längs der optischen Achse (A) angefügt sind und wenigstens zwei Linsen (18, 20) beiderseits des Mittelkörpers (14) längs der optischen Achse (B) angefügt sind, wobei der Mittelkörper (14) und die Linsen (12, 16; 18, 20) aus wenigstens einem ersten und einem zweiten lichtdurchlässigen Material (8, 10), die verschieden sind, gebildet sind, wobei die Brechungsindizes und die Krümmungsradien der Flächen der Linsen so bestimmt sind, dass die Monoblockstruktur längs der zwei optischen Achsen (A, B) zwei Brennweiten mit unterschiedlichen Werten aufweist und dass die Fokussierung der Lichtstrahlen in der Bildebene für das gesamte sichtbare Spektrum ausgezeichnet ist.

2. Optische Vorrichtung nach Anspruch 1, **dadurch gekennzeichnet, dass** jede Brennweite durch ein Triplett aus drei angefügten Linsen (12, 14, 16, 18, 20) bestimmt ist, mit dem Ziel, dass sich die chromatischen Aberrationen dieser Linsen (12, 14, 16, 18, 20) gegenseitig wirksam kompensieren.

3. Optische Vorrichtung nach einem der Ansprüche 1 oder 2, **dadurch gekennzeichnet, dass** die optischen Achsen (A, B) zueinander senkrecht sind.

4. Optische Vorrichtung nach einem der Ansprüche 1 oder 2, **dadurch gekennzeichnet, dass** sie drei verschiedene optische Achsen aufweist, die voneinander um 45° beabstandet sind.

5. Optische Vorrichtung nach einem der Ansprüche 1 bis 4, **dadurch gekennzeichnet, dass** der optische Block im Wesentlichen eine Parallelepiped-Form hat und dass sie eine optische Achse besitzt, die zu dessen unterer und zu dessen oberer Fläche senkrecht ist.

6. Optische Vorrichtung nach einem der Ansprüche 1 bis 5, **dadurch gekennzeichnet, dass** das Material (6, 8), das für die Herstellung der optischen Vorrichtung (6) ausgewählt ist, wahlweise Glas oder ein Kunststoff sein kann.

7. Optische Vorrichtung nach einem der Ansprüche 1 bis 6, **dadurch gekennzeichnet, dass** die äußeren Flächen der optischen Vorrichtung (6) mit einer Lage aus einem Antireflexionsmaterial beschichtet sind.

8. Optische Vorrichtung nach einem der Ansprüche 1 bis 7, **dadurch gekennzeichnet, dass** die Schmelztemperatur des ersten Materials, das für die Herstellung des Kerns der optischen Vorrichtung (6) verwendet wird, höher als jene des zweiten Materials ist, das um das erste gegossen wird.

9. Optische Vorrichtung nach einem der Ansprüche 1 bis 8, **dadurch gekennzeichnet, dass** die Materialien, die für die Herstellung der optischen Vorrichtung (6) ausgewählt sind, Brechungsindizes von 1,47 bzw. 1,59 haben.

10. Optische Vorrichtung nach einem der Ansprüche 6 bis 9, **dadurch gekennzeichnet, dass** die Materialien, die für die Herstellung der optischen Vorrichtung (6) ausgewählt sind, Poly-4-Methyl-Pentan und Polystyrol sind.

## Claims

1. Multiple focal distance light collecting optical device forming a lens for a photographic apparatus consisting in a monoblock structure such as the light is only refracted at an interface between air and the optical device (6) when it penetrates and when it exits said optical device (6), this optical device (6) being such that the monoblock structure, formed of a central body (14), determines at least two optical axes (A, B) forming between them an angle different from zero, an image being capable to be formed along each optical axis respectively, at least two lenses (12, 16) being applied against and attached on either sides of the central body (14) along optical axis (A) and at least two lenses (18, 20) being applied against and attached on either sides of central body (14), along optical axis (B), the central body (14) and the lenses (12, 16; 18, 20) being made of at least a first and a second different transparent materials (8, 10), the refractive indices and the curvature radii of the lenses faces being determined such as the monoblock structure has, along the two optical axes (A, B), two focal distances having different values and so that the focalisation of the light rays in the image plane be excellent for all the visible spectrum.

2. Optical device according to claim 1, **characterised in that** each focal distance is determined by a triplet of three lenses (12, 14, 16, 18, 20), so that the chromatic aberrations of said lenses (12, 14, 16, 18, 20) tend to compensate for each other efficiently.

3. Optical device according to either of claims 1 or 2, **characterised in that** the focal distances (A, B) are perpendicular to each other.

4. Optical device according to either of claims 1 or 2, **characterised in that** it has three distinct focal distances, spaced at 45° from each other.

5. Optical device according to any one of claims 1 to 4, **characterised in that** the optical block has a substantially parallelepiped form and that it has a focal distance perpendicular to its lower and upper faces.

6. Optical device according to any one of claims 1 to 5, **characterised in that** the material (6, 8) selected for manufacturing said optical device (6) can be either glass or a plastic material.

7. Optical device according to any one of claims 1 to 6, **characterised in that** the external faces of said device (6) are coated with a layer of anti-glare material.

8. Optical device according to any one of claims 1 to 7, **characterised in that** the melting temperature of the first material used to make the core of said optical device (6) is higher than that of the second material moulded around the first.

9. Optical device according to any one of claims 1 to 8, **characterised in that** the materials selected for manufacturing said optical device (6) have refractive indices equal to 1.47 and 1.59 respectively.

10. Optical device according to any one of claims 6 to 9, **characterised in that** the materials selected for manufacturing said optical device (6) are poly-4-methly-pentane and polystyrene.
